# EUROPÄISCHE PATENTSCHRIFT

(11) **EP 0 736 399 B1**
(45) Veröffentlichungstag und Bekanntmachung des Hinweises auf die Patenterteilung: **07.06.2000**
(21) Anmeldenummer: 96104118.3
(22) Anmeldetag: 15.03.1996
(51) Int. Cl.: B60C 1/00, C08L 9/06

(54) **Laufstreifenmischung für pneumatische Reifen**
Composition for the treads of pneumatic tyres
Composition pour les bandes de roulement de pneus

(30) Priorität: 06.04.1995 DE 19512543
(43) Veröffentlichungstag der Anmeldung: 09.10.1996
(73) Patentinhaber: Continental Aktiengesellschaft, 30165 Hannover (DE)
(72) Erfinder: Rennar, Nikolaus, Prof. Dr. Dipl.-Chem., 97294 Unterpleichfeld (DE)

(56) Entgegenhaltungen:
- EP-A- 0 537 640
- EP-A- 0 644 235
- US-A- 5 336 730
- DATABASE WPI Section Ch, Week 9251 Derwent Publications Ltd., London, GB; Class A12, AN 92-421122 XP002008176 & JP-A-04 318 044 (TOYO RUBBER IND CO LTD) , 9.November 1992

## Beschreibung

Die Erfindung betrifft eine mit Schwefel vulkanisierbare Kautschukmischung für Laufstreifen, ein Verfahren zu ihrer Herstellung sowie Reifen umfassend diesen Reifenlaufstreifen bestehend aus der ausgehärteten Kautschukmischung.

Die Betriebsleistung eines Reifenlaufstreifens ist von seiner Zusammensetzung abhängig. In dem Fall, in welchem ein verminderter Rollwiderstand zusammen mit einer guten Haftung bei Nässe (Naßgriff) gefordert wird, verwendet man üblicherweise eine Kautschukmischung für den Reifenlaufstreifen, die einen in einem organischen Lösungsmittel polymerisierten Styrol-Butadien-Kautschuk ("SBR") in Kombination mit wenigstens einem anderen Dien-Elastomer und feinverteilter, gefällter Kieselsäure als verstärkendem Füllmaterial umfasst. Die Kieselsäure wird entweder alleine oder in Kombination mit Ruß eingesetzt. Ferner enthalten die Laufstreifenzusammensetzungen normalerweise Mineralöl als Weichmacher. Die Vulkanisation wird durch Schwefel und Vulkanisationsregler bewirkt.

Aufgrund der Tatsache, daß die polare Oberfläche der Kieselsäuren, im Gegensatz zu der Oberfläche von Ruß, gegenüber Kautschuk vermindert aktiv ist, ist es notwendig, die Kieselsäure mit einem relativ teuren Silankupplungsmittel zu behandeln, um die Verbindung der Kieselsäureoberfläche mit dem Kautschuk sicherzustellen. Diese Behandlung wird normalerweise so durchgeführt, daß das Silankupplungsmittel zusammen mit der Kieselsäure während des Mischprozesses zum Kautschuk zugegeben wird. Üblicherweise erfordert dieses Mischverfahren jedoch wegen der unterschiedlichen Reaktivität der verschiedenen funktionellen Gruppen in den meisten Verstärkungsadditiven sehr genau kontrollierte Mischbedingungen mit in vielen Fällen zusätzlichen Verarbeitungsschritten, siehe z.B. EP-A-0 644 235.

Darüber hinaus ist auf nasser oder feuchter Fahrbahn die Haftung von Laufstreifenmischungen, die Kieselsäure in Kombination mit einer SBR-Kautschukmatrix enthalten, gewöhnlich schlechter gegenüber konventionellen rußgefüllten Reifenkautschuksystemen. Dies ist vor allem bei Fahrzeugen ohne Antiblockiersystem-Ausstattung (ABS) zu beobachten.

Auch die Verschleiß-Lebensdauer kieselsäuregefüllter SBR-Systeme ist gegenüber konventionellen Mischungssystemen geringer.

Es war daher eine Aufgabe der vorliegenden Erfindung, eine mit Schwefel vulkanisierbare Kautschukmischung bereitzustellen, die für Laufstreifen von pneumatischen Reifen geeignet ist. Derartige, solche Laufstreifen aufweisende Reifen sollten einen verbesserten Rutsch- und Rollwiderstand ohne die oben erwähnten Nachteile besitzen. Insbesondere sollten der Abrieb und die Lenkpräzision nicht verschlechtert sein. Ferner sollte die Reifenherstellung aufgrund des Einsatzes preisgünstigerer Rohmaterialien sowie reduzierten Mischaufwandes gegenüber oben beschriebener Lösung kostengünstiger werden.

Diese Aufgabe wurde erfindungsgemäß gelöst durch eine mit Schwefel vulkanisierbare Kautschukmischung für Reifenlaufstreifen umfassend
(a) wenigstens ein Terpolymer aus einem konjugierten Dien, einer aromatischen Vinylverbindung und einem monoolefinischen Monomer,
(b) gegebenenfalls wenigstens ein Dienelastomer und/oder wenigstens ein Copolymer eines konjugierten Diens und einer aromatischen Vinylverbindung,
(c) wenigstens ein Phenolharz und/oder dessen Phenol- und Aldehyd-Ausgangskomponente,
(d) feinverteilte, gefällte Kieselsäure oder eine Kombination von feinverteilter, gefällter Kieselsäure und Ruß als verstärkenden Füllstoff sowie
(e) gegebenenfalls weitere übliche Zusatzstoffe.

Das erfindungsgemäß für das Terpolymer eingesetzte konjugierte Dien ist ausgewählt aus 1,3-Butadien, Isopren, 2,3-Dimethyl-1,3-butadien, Chloropren, 1,3-Pentadien, Hexadien oder Gemischen davon. Die aromatische Vinylverbindung ist ausgewählt aus Styrol, α-Methylstyrol, p-Methylstyrol, o-Methylstyrol, p-Butylstyrol, Vinylnaphthalin oder Gemischen davon. Das monoolefinische Monomer ist ausgewählt aus Acrylnitril, Methacrylnitril oder Gemischen davon. Bevorzugt ist ein Terpolymer aus Butadien, Styrol und Acrylnitril.

Der Anteil des konjugierten Diens beträgt 85-30 Gew.-%, vorzugsweise 85-40 Gew.-%, der Anteil der aromatischen Vinylverbindung 10-40 Gew.-% und der Anteil des monoolefinischen Monomers 5-30 Gew.-%, vorzugsweise 5-20 Gew.-%, bezogen auf das Terpolymer.

Das Terpolymer besitzt eine Glasübergangstemperatur im Temperaturintervall von 0°C bis -60°C, vorzugsweise von -5 °C bis -50 °C. Dabei läßt sich die Glastemperatur sowohl über den Anteil der aromatischen Vinylkomponente als auch über den Gehalt der monoolefinischen Komponente im Terpolymer über einen weiten Temperaturbereich einstellen, so daß sich die Eigenschaften der Kautschukmischung in der gewünschten Richtung optimieren lassen.

Terpolymere gemäß der vorliegenden Erfindung können-nach dem Fachmann bekannten Polymerisationsverfahren hergestellt werden. Es sei hier insbesondere auf die einschlägige Fachliteratur verwiesen, z.B.:
H.-G. Elias: "Makromoleküle", Band 1, 5. Auflage, Seite 512-550, Hüthig & Wepf, Basel, Heidelberg, New York, 1990;
F. Lohse in: H. Batzer, Ed., "Polymere Werkstoffe", Band 1, Seite 33-136, Georg Thieme Verlag, Stuttgart, New York, 1985.

Die Polymerisation der erfindungsgemäßen Terpolymere wird bevorzugt in Emulsion durchgeführt.

Die erfindungsgemäße Kautschukmischung kann ferner bis zu 90 Gew.-%, vorzugsweise bis zu 30 Gew.-%, bezogen auf den Elastomergehalt ((a)+(b)) wenigstens eines Dien-Elastomers und/oder eines Copolymers eines konjugierten Diens und einer aromatischen Vinylverbindung enthalten, ausgewählt aus Naturkautschuk, synthetischem Polyisopren und Polybutadien oder Copolymeren aus Isopren und Butadien bzw. Copolymeren aus Styrol und Butadien.

Das Phenolharz wird anstelle des sonst üblichen, teuren Silanisierungsmittels zur Ankopplung der aktiven Kieselsäure an die Kautschukmatrix verwendet. Dabei kommt es zu einer besonderen Verträglichkeit und einem Synergismus zwischen den polaren Phenolharzen, dem Terpolymer und der Kieselsäure.

Bei den Phenolharzen handelt es sich um Polykondensate, die erhältlich sind aus einer oder mehreren phenolischen Komponenten und einer oder mehreren Aldehyden. Die erfindungsgemäß eingesetzten phenolischen Ausgangsstoffe sind ausgewählt aus unsubstituiertem Phenol und Resorcin sowie aus insbesondere in p-Stellung durch größere Alkylreste (C₄- bis C₁₂-Alkylgruppen) substituierten Alkylphenolen und naturharzmodifizierten Phenolharzen oder Gemischen davon. Die erfindungsgemäß eingesetzten Aldehyde sind ausgewählt aus Formaldehyd, Butyraldehyd, Benzaldehyd, Salicylaldehyd, Acrolein, Crotonaldehyd, Acetaldehyd oder Gemischen davon. Der bevorzugte Aldehyd ist Formaldehyd.

Die dieser Erfindung entsprechenden Phenolharze sind charakterisiert durch das Vorliegen funktioneller Hydroxylgruppen. Sie weisen eine Hydroxylzahl von > 500 mg KOH pro Gramm Einwaage (DIN 53 240) und Erweichungspunkte zwischen 90 °C und 120 °C (DIN 53 460) auf sowie eventuell vorhandene Doppelbindungen, was zu guter Verträglichkeit sowohl mit der Kautschukmatrix als auch mit der aktiven Kieselsäure führt, wodurch optimale Verstärkung und Verträglichkeit erreicht werden.

Alternativ oder zusätzlich zu den Phenolharzen können auch die oben angeführten Phenol- und Aldehyd-Ausgangskomponenten eingesetzt werden, was zum gleichen Ergebnis führt.

Der Anteil der Phenolharze beträgt 0,5-20 Gew.-Teile, vorzugsweise 2-10 Gew.-Teile, bezogen auf 100 Gewichtsteile Elastomer ((a)+(b)).

Gemäß der Erfindung kann grundsätzlich jede feinverteilte, (gefällte) Kieselsäure eingesetzt werden, wie sie üblicherweise bei der Herstellung von Kautschukmischungen eingesetzt wird und die bei dem auf diesem Gebiet tätigen Fachmann als bekannt vorausgesetzt werden kann. In diesem Zusammenhang sei insbesondere auf die in der EP-A-0 501 227, EP-A-0 157 703 und der DE-A-2 410 014 beschriebenen Kieselsäuren verwiesen.

Allgemein können demnach gefällte und feinverteilte Kieselsäuren als Füllstoff in der erfindungsgemäßen Zusammensetzung eingesetzt werden, die eine BET-Fläche von 40-350 m²/g, insbesondere von 100-250 m²/g, eine CTAB-Fläche von 50-350 m²/g, vorzugsweise von 100-250 m²/g und einen mittleren Teilchendurchmesser von 10-150 nm, vorzugsweise 10-100 nm und eine DBP-Adsorption von 50-350 ml/100 g, vorzugsweise 150-250 ml/100 g besitzen. Die Kieselsäure kann entweder alleine oder in Kombination mit Ruß eingesetzt werden.

Die Oberflächen der vorgenannten Kieselsäuren können zusätzlich mit Silankupplungsmitteln (Organosilanen) der nachfolgenden Formeln I bis III

[Rₙ ¹-(RO)₃₋ₙ Si-(Alk)ₘ - (Ar)ₚ]_{q}[B] (I),

Rₙ ¹ (RO)₃₋ₙ Si-(Alkyl) (II),

oder

Rₙ ¹ (RO)₃₋ₙ Si-(Alkenyl) (III),

modifiziert werden, in denen bedeuten
- B:: -SCN, -SH, -Cl, NH₂ (wenn q = 1) oder
-Sₓ (wenn q = 2),
- R und R¹:: eine Alkylgruppe mit 1 bis 4 Kohlenstoffatomen, den Phenylrest, wobei alle Reste R und R¹ jeweils die gleiche oder eine verschiedene Bedeutung haben können,
- n:: 0, 1, 2 oder 3,
- Alk:: einen zweiwertigen geraden oder verzweigten Kohlenwasserstoffrest mit 1 bis 6 Kohlenstoffatomen,
- m:: 0 oder 1,
- Ar:: einen Arylrest mit 6 bis 12 C-Atomen, bevorzugt 6 C-Atome,
- p:: 0 oder 1 mit der Maßgabe, daß p und n nicht gleichzeitig 0 bedeuten,
- x:: eine Zahl von 2 bis 8,
- Alkyl:: einen einwertigen geraden oder verzweigten gesättigten Kohlenwasserstoffrest mit 1 bis 20 Kohlenstoffatomen, bevorzugt 2 bis 8 Kohlenstoffatomen,
- Alkenyl:: einen einwertigen geraden oder verzweigten ungesättigten Kohlenwasserstoffrest mit 2 bis 20 Kohlenstoffatomen, bevorzugt 2 bis 8 Kohlenstoffatomen.

Im Zusammenhang mit den Organosilanen, deren Herstellung und deren Kombination mit Kieselsäuren wird ferner auf die nachfolgende Literatur verwiesen:
S. Wolff: "Reinforcing and Vulcanization Effects of Silane Si 69 in Silica-Filled Compounds", Kautschuk + Gummi, Kunststoffe 34, 280-284 (1981);
S. Wolff: "Silanes in Tire Compounding After Ten Years - Review", Vortrag gehalten anläßlich des Third Annual Meeting and Conference on Tire Science and Technology, The Tire Society, 28.-29. März 1984, Akron, Ohio, USA;
S. Wolff: "Optimization of Silane-Silica OTR Compounds. Part 1: Variations of Mixing Temperature and Time during the Modification of Silica with Bis(3-triethoxysilylpropyl)tetrasulfide", Rubber Chem. Technol. 55, 967-989 (1982);
S. Wolff, R. Panenka: " Present Possibilities to Reduce Heat Generation of Tire Compounds", Vortrag gehalten anläßlich der International Rubber Conference IRC'85 in Kyoto, Japan;
S. Wolff, R. Panenka, E.H. Tan: "Reduction of Heat Generation in Truck Tire Tread and Subtread Compounds", Vortrag gehalten anläßlich der International Conference on Rubbers and Rubber-like Materials, Jamshedpur, Indien, 6.-8. November 1986;
S. Wolff: "The Influence of Fillers on Rolling Resistance", Vortrag gehalten anläßlich einer Tagung der Rubber Division, American Chemical Society, New York/NJ, USA, 8.-11. April 1986.

Die erfindungsgemäß für die Vorbehandlung der Kieselsäuren eingesetzten Silankupplungsmittel sind dem Fachmann aus dem weiteren Stand der Technik, insbesondere aus der EP-A-0 447 066, der DE-A-2 062 883 oder der DE-A-2 457 446 bekannt. Bevorzugt im Rahmen der vorliegenden Erfindung als Silankupplungsmittel sind insbesondere solche Silane, die wenigstens eine Alkoxygruppe im Molekül besitzen. Diese Silane sind ausgewählt aus Bis(3-triethoxysilylpropyl)tetrasulfid, Bis(2-triethoxysilylethyl)tetrasulfid, Bis(3-trimethoxysilylpropyl)tetrasulfid, Bis(2-trimethoxysilylethyl)tetrasulfid, 2-Mercaptoethyltriethoxysilan, 3-Mercaptopropyltriethoxysilan, 2-Mercaptoethyltrimethoxysilan, 2-Mercaptoethyltriethoxysilan, 3-Nitropropyltrimethoxysilan, 3-Nitropropyltriethoxysilan, 3-Chloropropyltrimethoxysilan, 3-Chloropropyltriethoxysilan, 2-Chloroethyltrimethoxysilan, 2-Chloroethyltriethoxysilan, 3-Trimethoxysilylpropyl-N,N-dimethylthiocarbamoyltetrasulfid, 3-Triethoxysilylpropyl-N,N-dimethylthiocarbamoyltetrasulfid, 2-Triethoxysilylethyl-N,N-dimethylthiocarbamoyltetrasulfid, 3-Trimethoxysilylpropylbenzothiazoltetrasulfid, 3-Triethoxysilylpropylbenzothiazoltetrasulfid, 3-Triethoxysilylpropylmethacrylatmonosulfid, 3-Trimethoxysilylpropylmethacrylatmonosulfid. Darunter sind Bis(3-triethoxysilylpropyl)tetrasulfid und 3-Trimethoxysilylpropylbenzothiazoltetrasulfid bevorzugt. Des weiteren können Bis(3-diethoxymethylsilylpropyl)tetrasulfid, 3-Mercaptopropyldimethoxymethylsilan, 3-Nitropropyldimethoxymethylsilan, 3-Chloropropyldimethoxymethylsilan, Dimethoxymethylsilylpropyl-N,N-dimethylthiocarbamoyltetrasulfid, Dimethoxymethylsilylpropylbenzothiazoltetrasulfid, 3-Thiocyanatopropyltriethoxysilan, 3-Thiocyanatopropyltrimethoxysilan, Trimethoxyvinylsilan, Triethoxyvinylsilan als Silankupplungsmittel eingesetzt werden.

Das Silankupplungsmittel wird in einer Menge von 0,2-30 Gew.-Teilen, vorzugsweise von 0,5-15 Gew.-Teilen, bezogen auf 100 Gew.-Teile der Kieselsäure eingesetzt. Die Reaktion zwischen der Kieselsäure und dem Silankupplungsmittel kann während der Herstellung der Mischung (in situ) oder, alternativ hierzu, außerhalb durchgeführt werden. Letzteres führt zu einer vorbehandelten (modifizierten) Kieselsäure, die als solche der Mischung zugesetzt werden kann.

Das Verhältnis der eingesetzten Volumina von Kieselsäure zu Ruß, wenn in Kombination miteinander eingesetzt, beträgt 1:4 bis 5:1, vorzugsweise 1:2 bis 3:1.

Gemäß der Erfindung kann grundsätzlich jeder als Füllstoff geeignete Ruß eingesetzt werden. Bevorzugt ist jedoch ein Ruß, der eine Dibutylphthalat-Adsorption (DBPA-Zahl) von 30 bis 180 cm³/100 g (ASTM D 2414), eine Iod-Adsorptionszahl von 10 bis 250 g/kg (ASTM D 1510) sowie eine CTAB-Zahl von 5 bis 150 m²/g (ASTM D 3765) besitzt.

Die erfindungsgemäße Kautschukmischung enthält das verstärkende Füllmaterial in einer Menge von 40-100 Gew.-Teilen, vorzugsweise 40-70 Gew.-Teilen, bezogen auf 100 Gew.-Teile der Kautschuke ((a) und (b)).

Die Dien-Elastomere bzw. Copolymere können aus den zugrundeliegenden Monomeren nach dem Fachmann bekannten Verfahren in Gegenwart von Übergangsmetallkatalysatoren und insbesondere solchen, die Kobalt, Titan, Nickel oder Neodym enthalten, hergestellt werden.

Die Kautschukmischung kann ferner die üblichen Zusätze in der üblichen Dosierung enthalten, wie insbesondere Weichmacher (z.B. Mineralöle), Alterungsschutzmittel, Schwefel, Vulkanisationsbeschleuniger (z.B. Sulfenamide, Thiazole, Guanidine), anorganische Pigmente, weitere, jedoch andere Füllstoffe als die oben genannten, Aktivatoren (z.B. Stearinsäure, Zinkoxid), Wachse.

Die Erfindung betrifft ferner ein Verfahren zur Herstellung der oben beschriebenen, mit Schwefel vulkanisierbaren Kautschukmischung durch
1) Mischen von wenigstens einem Terpolymeren eines konjugierten Diens, einer aromatischen Vinylverbindung, eines weiteren monoolefinischen Monomers und gegebenenfalls wenigstens einem Dien-Elastomer und/oder wenigstens einem Copolymer eines konjugierten Diens und einer aromatischen Vinylverbindung als weiterem Polymer mit einem Füllstoff bestehend aus feinverteilter, gefällter Kieselsäure oder feinverteilter, gefällter Kieselsäure in Kombination mit Ruß, wenigstens einem Phenolharz und/oder dessen Phenol- und Aldehyd-Ausgangskomponente sowie der üblicherweise verwendeten Zusätze mit Ausnahme des Vulkanisationssystems unter gleichzeitigem Erwärmen der Zusammensetzung auf eine Temperatur zwischen 110 und 150 °C,
2) Zumischen des Vulkanisationssystems bei einer Temperatur unterhalb der Vulkanisationstemperatur.

Hinsichtlich der Art und Anteile des konjugierten Diens, der aromatischen Vinylverbindung, des monoolefinischen Monomers, des weiteren Dien-Elastomers bzw. Copolymers, des Füllstoffs Kieselsäure und gegebenenfalls Ruß, des Phenolharzes, der üblichen Zusätze, des Vulkanisationssystems und eventuell eines zusätzlichen Silankupplungsmittels wird auf die obigen Ausführungen verwiesen.

Die Durchführung der Mischvorgänge und der Vulkanisation kann in den dem Fachmann bekannten Apparaturen (z.B. in Knetern) erfolgen. In der ersten Stufe des Mischens sollte eine Temperatur von wenigstens 110°C eingestellt werden.

Das Verfahren kann während des Mischens ferner auch so geführt werden, daß das Gemisch zunächst auf die vorgegebene Temperatur erwärmt und dann wieder auf eine Temperatur unterhalb der Vulkanisationstemperatur abgekühlt wird.

Dieser Zyklus ist wenigstens einmal zu durchlaufen.

Die erfindungsgemäße Kautschukmischung kann durch Vulkanisieren in Gegenwart eines geeigneten Vulkanisationssystems unter üblichen, dem Fachmann bekannten Bedingungen für Reifenlaufstreifen bei der Herstellung von pneumatischen Reifen verwendet werden. Die erfindungsgemäße ausgehärtete Kautschukmischung kann ferner in Fördergurten, Dichtungen, Keilriemen, Schläuchen und Schuhsohlen Verwendung finden.

Die vorliegende Erfindung betrifft ferner Reifen, die Reifenlaufstreifen umfassen, die aus der oben beschriebenen vulkanisierten erfindungsgemäßen Kautschukmischung bestehen.

Reifen, welche Laufstreifen aus den erfindungsgemäßen ausgehärteten Kautschukmischungen aufweisen, zeichnen sich durch besonders vorteilhafte Eigenschaften aus, wie insbesondere durch einen guten Rutsch- und Rollwiderstand bei akzeptablem Abriebwiderstand. Besonders zu erwähnen ist, daß das Verhältnis von Rutsch-, Roll- und Abriebwiderstand besonders ausgewogen ist.

Die vorliegende Erfindung wird durch die nachfolgenden Beispiele erläutert, ohne jedoch darauf beschränkt zu sein.

### Beispiele:

Eingesetzte Rohmaterialien bei der Herstellung der erfindungsgemäßen Kautschukmischungen:
- Co-BR:
   Handelsprodukt "Buna CB 10" der Firma Bayer AG, Deutschland (Kobalt-Polybutadien mit einem cis-1,4-Anteil von ca. 96 Gew.-%)
- SBR 1712:
   Handelsprodukt "Buna EM 1712" der Firma Hüls AG, Deutschland (Emulsions-SBR mit einem Gehalt an einpolymerisiertem Styrol von ca. 23,5 Gew.-%, ölverstreckt mit 37,5 Gew.-% aromatischem Mineralöl)
- Ruß N 339 (ASTM D 1765):
   Handelsprodukt "Corax N 339" der Firma Degussa, Deutschland (hergestellt nach dem Furnace-Verfahren)
- Kieselsäure VN3, VN2:
   Handelsprodukte "Ultrasil VN3", "Ultrasil VN2" der Firma Degussa, Deutschland (hergestellt nach dem Fällungs-Verfahren)
- Aktivator X 50 S:
   Handelsprodukt der Firma Degussa, Deutschland (Mischung von "Verstärkungsadditiv Si 69" mit "Corax N 330" im Gew.-Verhältnis 1:1)
- aromatisches Mineralöl:
   Handelsprodukt "Enerdex 65" der Firma BP
- Zinkweiß:
   Handelsprodukt "Zinkweiß-Rotsiegel Grillo" der Firma Grillo Zinkoxid GmbH, Deutschland

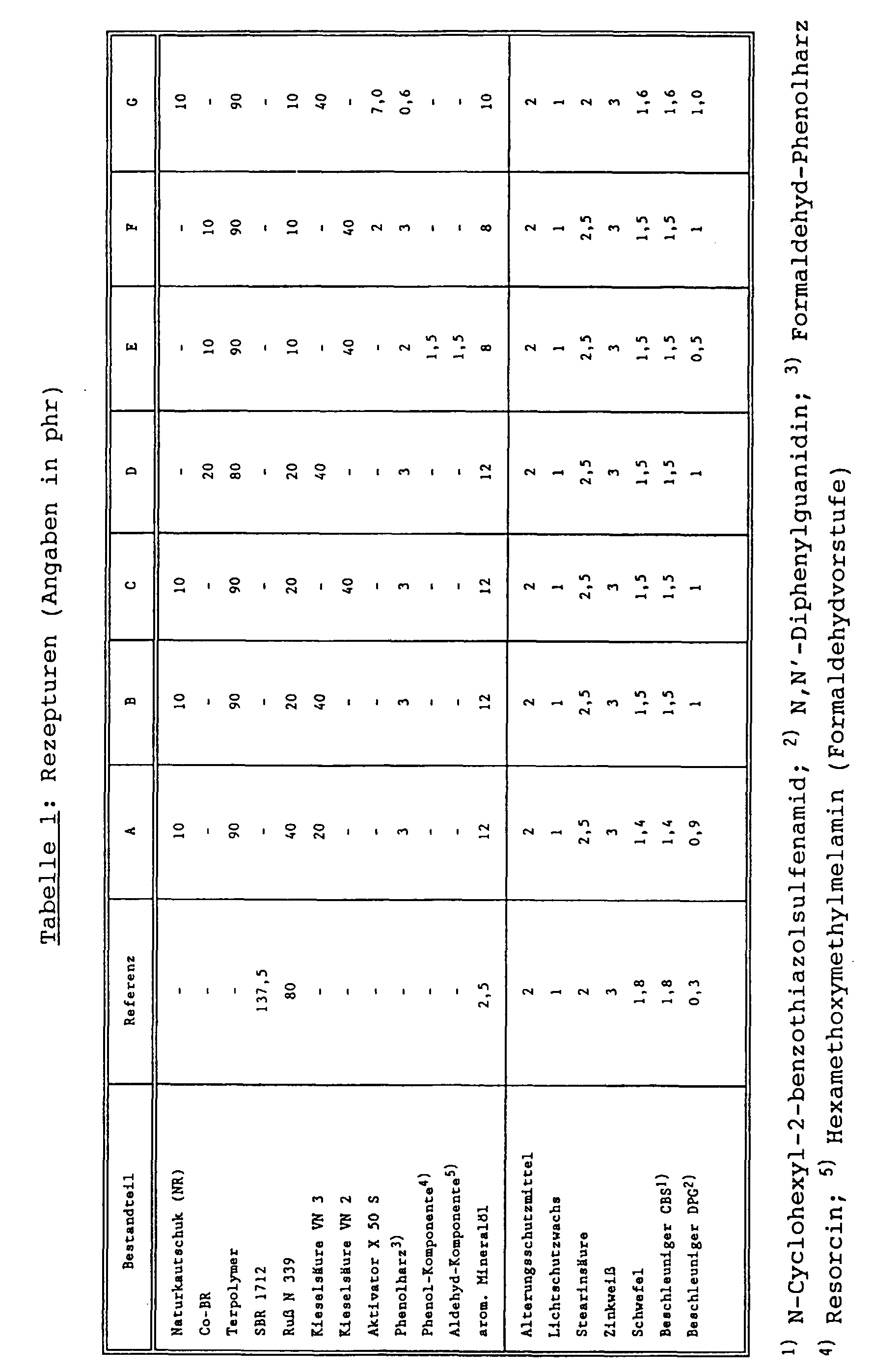

Aus den unter Zugrundelegung der aufgeführten Rezepturen erhaltenen Vulkanisaten wurden u.a. die in Tabelle 2 zusammengefaßten Meßdaten ermittelt.

Da die Bestimmung des Gummiabriebs nach DIN 53 516 kaum etwas über das Verschleißverhalten von Elastomeren in der Praxis aussagt, wurde zur Abschätzung des Straßenabriebverhaltens auf die Bestimmung der mechanischen ultimaten Vulkanisateigenschaften bei verschiedenen Temperaturen zurückgegriffen.
- Härteprüfung (Shore A) : DIN 53 505
- Messung der Rückprall-Elastizität : DIN 53 512
- Bestimmung der Zugfestigkeit : DIN 53 504
- Bestimmung der Reißdehnung : DIN 53 504
- Spannungswerte bei 100%, 300% Dehnung : DIN 53 504
- Verlustfaktor tan δ bei 60 °C, 10 Hz, ± 2% dyn. Verformung, Zug/Druck-Verformung gemessen mit dyn.-mech. Analysator (Eplexor) : DIN 53 513, DIN 53 535

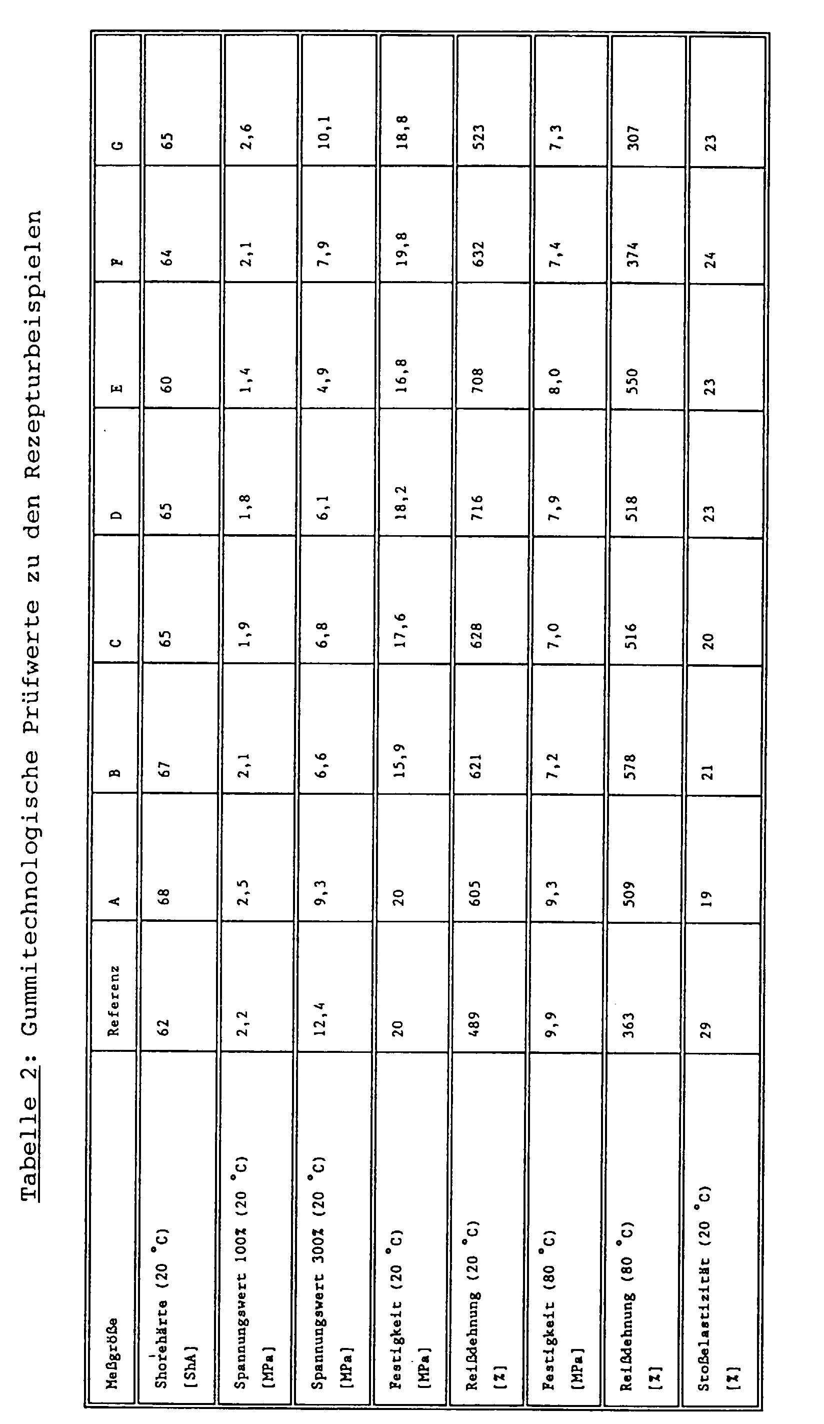

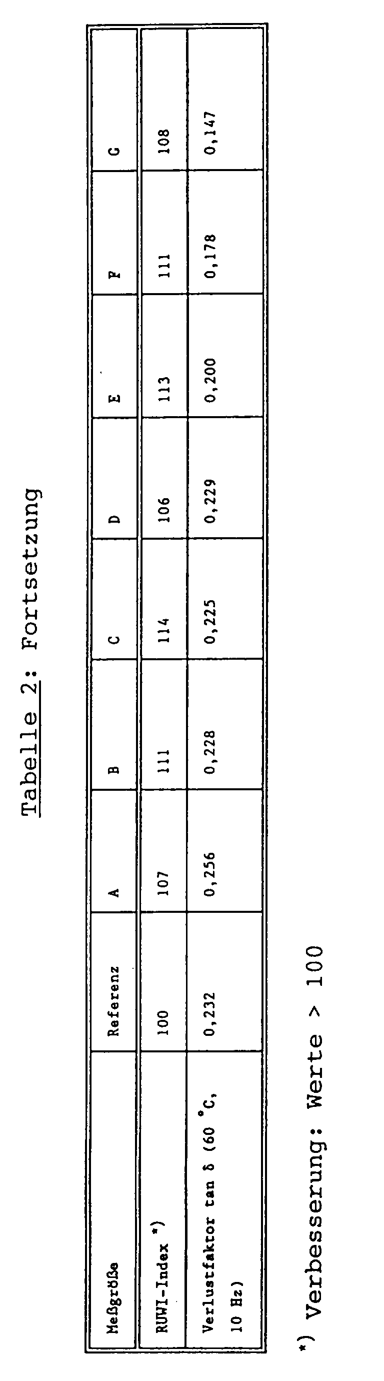

## Patentansprüche

1. Mit Schwefel vulkanisierbare Kautschukmischung für Reifenlaufstreifen umfassend
(a) wenigstens ein Terpolymer aus einem konjugierten Dien, einer aromatischen Vinylverbindung und einem monoolefinischen Monomer,
(b) gegebenenfalls wenigstens ein Dienelastomer und/oder wenigstens ein Copolymer eines konjugierten Diens und einer aromatischen Vinylverbindung,
(c) wenigstens ein Phenolharz und/oder dessen Phenol- und Aldehyd-Ausgangskomponente,
(d) feinverteilte, gefällte Kieselsäure oder eine Kombination von feinverteilter, gefällter Kieselsäure und Ruß als verstärkenden Füllstoff sowie
(e) gegebenenfalls weitere übliche Zusatzstoffe.

2. Kautschukmischung nach Anspruch 1, dadurch gekennzeichnet, daß das konjugierte Dien des Terpolymers ausgewählt ist aus 1,3-Butadien, Isopren, 2,3-Dimethyl-1,3-butadien, Chloropren, 1,3-Pentadien, Hexadien oder Gemischen davon; die aromatische Vinylverbindung ausgewählt ist aus Styrol, α-Methylstyrol, p-Methylstyrol, o-Methylstyrol, p-Butylstyrol, Vinylnaphthalin oder Gemischen davon; und das monoolefinische Monomer ausgewählt ist aus Acrylnitril, Methacrylnitril oder Gemischen davon.

3. Kautschukmischung nach Anspruch 1 oder 2, dadurch gekennzeichnet, daß das Dienelastomer ausgewählt ist aus Naturkautschuk, synthetischem Polyisopren, Polybutadien, Isopren-Butadien-Copolymer und daß das Copolymer eines konjugierten Diens und einer aromatischen Vinylverbindung vorzugsweise ein Styrol-Butadien-Copolymer ist.

4. Kautschukmischung nach einem oder mehreren der Ansprüche 1 bis 3, dadurch gekennzeichnet, daß das Phenolharz ausgewählt ist aus Polykondensaten, die erhältlich sind durch Reaktion von wenigstens einer phenolischen Komponente mit wenigstens einem Aldehyd.

5. Kautschukmischung nach einem oder mehreren der Ansprüche 1 bis 4, dadurch gekennzeichnet, daß die feinverteilte, gefällte Kieselsäure eine BET-Fläche von 40 bis 350 m²/g, eine CTAB-Fläche von 50 bis 350 m²/g, einen mittleren Teilchendurchmesser von 10 bis 150 nm sowie eine DBP-Zahl von 50-350 ml/100 g besitzt.

6. Kautschukmischung nach einem oder mehreren der Ansprüche 1 bis 5, dadurch gekennzeichnet, daß der Ruß eine Dibutylphthalat-Adsorption (DBPA-Zahl) von 30 bis 180 cm³/100 g (ASTM D 2414), eine Iod-Adsorptionszahl von 10 bis 250 g/kg (ASTM D 1510) sowie eine CTAB-Zahl von 5 bis 150 m²/g (ASTM D 3765) besitzt.

7. Kautschukmischung nach einem oder mehreren der Ansprüche 1 bis 6, dadurch gekennzeichnet, daß sie das Füllmaterial in einer Menge von 40-100 Gew.-Teilen, bezogen auf 100 Gew.-Teile des Elastomers ((a)+(b)) enthält.

8. Kautschukmischung nach einem oder mehreren der Ansprüche 1 bis 7, dadurch gekennzeichnet, daß das Volumenverhältnis von Kieselsäure zu dem Ruß, wenn im Gemisch eingesetzt, 1:4 bis 5:1 beträgt.

9. Kautschukmischung nach einem oder mehreren der Ansprüche 1 bis 8, dadurch gekennzeichnet, daß die Oberflächen der Kieselsäuren zusätzlich mit Silankupplungsmitteln modifiziert sind.

10. Kautschukmischung nach Anspruch 9, dadurch gekennzeichnet, daß die mit den Silankupplungsmitteln modifizierten Kieselsäuren erhältlich sind durch Umsetzung von 0,2 bis 30 Gew.-Teilen des Silankupplungsmittels bezogen auf 100 Gew.-Teile der Kieselsäure, wobei die Reaktion zwischen Kieselsäure und Silankupplungsmittel während der Mischungsherstellung (in situ) oder außerhalb (vormodifiziert) durchgeführt werden kann.

11. Verfahren zur Herstellung der Kautschukmischung, wie in einem oder mehreren der Ansprüche 1 bis 10 definiert, durch
1) Mischen von wenigstens einem Terpolymeren eines konjugierten Diens, einer aromatischen Vinylverbindung und einem monoolefinischen Monomer und gegebenenfalls wenigstens einem Dien-Elastomer als weiterem Polymer mit feinverteilter, gefällter Kieselsäure oder feinverteilter, gefällter Kieselsäure in Kombination mit Ruß als Füllstoff, wenigstens einem Phenolharz und/oder dessen Phenol- und Aldehyd-Ausgangskomponente sowie der üblicherweise verwendeten Zusätze mit Ausnahme des Vulkanisationssystems unter gleichzeitigem Erwärmen der Zusammensetzung auf eine Temperatur zwischen 110 und 150 °C,
2) Zumischen des Vulkanisationssystems bei einer Temperatur unterhalb der Vulkanisationstemperatur.

12. Reifen umfassend einen Laufstreifen bestehend aus der mit Schwefel ausgehärteten Kautschukmischung, wie in einem oder mehreren der Ansprüche 1 bis 10 definiert.

## Claims

1. Rubber mixture, which is vulcanisable with sulphur, for tyre tread strips, including
(a) at least one terpolymer formed from a conjugated diene, an aromatic vinyl compound and a monoolefinic monomer,
(b) possibly at least one diene elastomer and/or at least one copolymer of a conjugated diene and an aromatic vinyl compound,
(c) at least one phenol resin and/or its phenol and aldehyde starting components,
(d) finely divided, precipitated silica or a combination of finely divided, precipitated silica and carbon black as the reinforcing filler substance, and
(e) possibly additional conventional additives.

2. Rubber mixture according to claim 1, characterised in that the conjugated diene of the terpolymer is selected from 1,3-butadiene, isoprene, 2,3-dimethyl-1,3-butadiene, chloroprene, 1,3-pentadiene, hexadiene or mixtures thereof; the aromatic vinyl compound is selected from styrene, α-methylstyrene, p-methylstyrene, o-methylstyrene, p-butylstyrene, vinylnaphthaline or mixtures thereof; and the monoolefinic monomer is selected from acrylonitrile, methacrylonitrile or mixtures thereof.

3. Rubber mixture according to claim 1 or 2, characterised in that the diene elastomer is selected from natural rubber, synthetic polyisoprene, polybutadiene or isoprene-butadiene copolymer, and in that the copolymer of a conjugated diene and an aromatic vinyl compound is preferably a styrene-butadiene copolymer.

4. Rubber mixture according to one or more of claims 1 to 3, characterised in that the phenol resin is selected from polycondensates, which are obtainable by reacting at least one phenolic component with at least one aldehyde.

5. Rubber mixture according to one or more of claims 1 to 4, characterised in that the finely divided, preciptiated silica has a BET area of 40 to 350 m²/g, a CTAB area of 50 to 350 m²/g, an average particle diameter of 10 to 150 nm and a DBP number of 50-350 ml/100 g.

6. Rubber mixture according to one or more of claims 1 to 5, characterised in that the carbon black has a dibutylphthalate adsorption (DBPA number) of 30 to 180 cm³/100 g (ASTM D 2414), an iodine adsorption number of 10 to 250 g/kg (ASTM D 1510) and a CTAB number of 5 to 150 m²/g (ASTM D 3765).

7. Rubber mixture according to one or more of claims 1 to 6, characterised in that it contains the filler material in a quantity of 40-100 parts by wt. relative to 100 parts by wt. elastomer ((a)+(b)).

8. Rubber mixture according to one or more of claims 1 to 7, characterised in that the ratio by volume of silica to carbon black, if used in the mixture, is 1:4 to 5:1.

9. Rubber mixture according to one or more of claims 1 to 8, characterised in that the surfaces of the silicas are additionally modified with silane coupling agents.

10. Rubber mixture according to claim 9, characterised in that the silicas, modified with the silane coupling agents, are obtainable by converting 0.2 to 30 parts by wt. silane coupling agent relative to 100 parts by wt. silica, the reaction between silica and silane coupling agent being accomplishable during the production of the mixture (in situ) or externally thereof (premodified).

11. Method of producing the rubber mixture, as defined in one or more of claims 1 to 10, by
1) mixing at least one terpolymer of a conjugated diene, an aromatic vinyl compound and a monoolefinic monomer, and possibly at least one diene elastomer as an additional polymer with finely divided, precipitated silica or finely divided, precipitated silicate in combination with carbon black as the filler substance, at least one phenol resin and/or its phenol and aldehyde starting components, as well as the conventionally used additives, with the exception of the vulcanisation system, whilst simultaneously heating the composition to a temperature between 110 and 150° C, and by
2) admixing the vulcanisation system at a temperature below the vulcanisation temperature.

12. Tyre, including a tread strip formed from a rubber mixture which has been age-hardened with sulphur, as defined in one or more of claims 1 to 10.

## Revendications

1. Mélange de caoutchouc pouvant être vulcanisés avec du soufre pour les bandes de roulement de pneus comprenant
(a) au moins un terpolymère d'un diène conjugué, d'un composé vinylaromatique et d'un monomère monooléfinique,
(b) éventuellement au moins un élastomère diène et/ou au moins un copolymère d'un diène conjugué et d'un composé vinylaromatique,
(c) au moins une résine phénolique et/ou ses composants de départ à base de phénol et d'aldéhyde,
(d) de l'acide silicique précipité, finement divisé ou une association d'acide silicique précipité, finement divisé et de suie en tant que charge de renforcement, ainsi que
(e) éventuellement d'autres additifs habituels.

2. Mélange de caoutchouc selon la revendication 1, caractérisé en ce que le diène conjugué du terpolymère est choisi parmi le 1,3-butadiène, l'isoprène, le 2,3-diméthyl-1,3-butadiène, le chloroprène, le 1,3-pentadiène, l'hexadiène ou leurs mélanges ; le composé vinylaromatique est choisi parmi le styrène, l'α-méthylstyrène, le p-méthylstyrène, l'o-méthylstyrène, le p-butylstyrène, le vinylnaphtalène ou leurs mélanges ; et le monomère monooléphinique est choisi parmi l'acrylonitrile, le méthacrylonitrile ou leurs mélanges.

3. Mélange de caoutchouc selon la revendication 1 ou 2, caractérisé en ce que l'élastomère diène est choisi parmi le caoutchouc naturel, le polyisoprène synthétique, le polybutadiène, le copolymère isoprène/butadiène et que le copolymère d'un diène conjugué et d'un composé vinylaromatique est de préférence un copolymère styrène/butadiène.

4. Mélange de caoutchouc selon l'une ou plusieurs des revendications 1 à 3, caractérisé en ce que la résine phénolique est choisie parmi les polycondensats qui sont obtenus au moyen d'une réaction d'au moins un composant phénolique avec au moins un aldéhyde.

5. Mélange de caoutchouc selon l'une ou plusieurs des revendications 1 à 4, caractérisé en ce que l'acide silicique précipité, finement divisé possède une surface spécifique BET de 40 à 350 m²/g, une surface spécifique CTAB de 50 à 350 m²/g, un diamètre moyen de particule de 10 à 150 nm ainsi qu'un indice DBP de 50 à 350 ml/100 g.

6. Mélange de caoutchouc selon l'une ou plusieurs des revendications 1 à 5, caractérisé en ce que, la suie possède une adsorption de phtalate de dibutyle (indice DBPA) de 30 à 180 cm³/100 g (ASTM D 2414), un indice d'adsorption d'iode de 10 à 250 g/kg (ASTM D 1510) ainsi qu'un indice CTAB de 5 à 150 m²/g (ASTM D 3765).

7. Mélange de caoutchouc selon l'une ou plusieurs des revendications 1 à 6, caractérisé en ce qu'il contient le matériau de charge ( (a)+(b) ) en une quantité de 40 à 100 parties en poids, par rapport à 100 parties en poids de l'élastomère.

8. Mélange de caoutchouc selon l'une ou plusieurs des revendications 1 à 7, caractérisé en ce que le rapport volumique de l'acide silicique à la suie, lorsqu'ils sont mis en oeuvre sous forme de mélange, est de 1/4 à 5/1.

9. Mélange de caoutchouc selon l'une ou plusieurs des revendications 1 à 8, caractérisé en ce que les surfaces des acides siliciques sont en plus modifiées avec des agents de couplage au silane.

10. Mélange de caoutchouc selon la revendication 9, caractérisé en ce que les acides siliciques modifiés avec les agents de couplage au silane sont obtenus au moyen d'une réaction de 0,2 à 30 parties en poids de l'agent de couplage au silane, rapportées à 100 parties en poids de l'acide silicique, la réaction pouvant être réalisée entre l'acide silicique et l'agent de couplage au silane pendant la préparation du mélange (in situ) ou en-dehors de celle-ci (prémodifié).

11. Procédé de préparation du mélange de caoutchouc, tel que défini selon l'une ou plusieurs des revendications 1 à 10, obtenu en
(1) mélangeant au moins un terpolymère d'un diène conjugué, un composé vinylaromatique et un monomère mono-oléfinique et éventuellement au moins un élastomère diène en tant que polymère supplémentaire, avec de l'acide silicique précipité, finement divisé ou de l'acide silicique précipité, finement divisé en association avec de la suie en tant que charge, au moins une résine phénolique et/ou ses composants de départ à base de phénol et d'aldéhyde ainsi que les additifs utilisés couramment à l'exception du système de vulcanisation, en chauffant simultanément la composition à une température comprise entre 110 et 150°C,
(2) en ajoutant au mélange, le système de vulcanisation à une température inférieure à la température de vulcanisation.

12. Pneus comprenant une bande de roulement constituée du mélange de caoutchouc durci avec du soufre, tels que définis dans l'une ou plusieurs des revendications 1 à 10.
